# Europäisches Patentamt

## European Patent Office

## Office européen des brevets

(19)

(11) Veröffentlichungsnummer: **0 076 947**
A1

(12)

# EUROPÄISCHE PATENTANMELDUNG

(21) Anmeldenummer: 82108765.7

(22) Anmeldetag: 22.09.82

(51) Int. Cl.³: **B 25 J 9/00**

(30) Priorität: 08.10.81 DE 3139674

(43) Veröffentlichungstag der Anmeldung: 20.04.83
Patentblatt 83/16

(84) Benannte Vertragsstaaten: **AT BE CH DE FR GB IT LI LU NL SE**

(71) Anmelder: **RHEIN-RUHR-GUMMI GMBH, Norbertstrasse 3-5, D-4300 Essen (DE)**

(72) Erfinder: **Lübke, Siegfried, Oemberg 17, D-4330 Mülheim (DE)**
Erfinder: **Bagh, Karl E., Ing., Im Springfeld 1, D-4250 Bottrop (DE)**

(54) Vorrichtung zum Handhaben von Gegenständen (Roboter).

(57) Die Erfindung bezieht sich auf eine Vorrichtung zum Handhaben von Gegenständen (Roboter), die wenigstens eine um eine horizontale und vorzugsweise auch um eine vertikale Achse bewegbare Schwenkeinheit mit einem an ihrem Ende befestigten Werkzeug aufweist. Sie schlägt vor, die Schwenkeinheit durch Verwendung von zwei Umlaufrädern mit Hülltrieb und abstandhaltendem Tragarm sowie zugehörigem Antrieb und Verschwenkung um eine feststehende untere Achse und feststehendes unteres Umlaufrad besonders einfach und durch baukastenartige Erweiterungsfähigkeit um wenigstens eine weitere identische Schwenkeinheit für verschiedenste Zwecke in vorbestimmten Räumen einsetzbar zu machen, wobei bei der Verwendung des kraft- und formschlüssigen Hülltriebes hauptsächlich an den Einsatz von Zahnriemen mit zugehörigen Zahnrädern gedacht ist.

- 1 -    00 76947

Vorrichtung zum Handhaben von Gegenständen zwecks Automatisierung von Arbeitsvorgängen ( Roboter ).

---

Aus Gründen der Rationalisierung, Vereinfachung und Verbilligung von Fertigungsabläufen in der Industrie und damit zur Steigerung der Produktivität werden Schritt um Schritt manuelle Tätigkeiten durch den einzelnen Anwendungsfall zugeschnittene Vorrichtungen - sogenannte Roboterersetzt. So sind bspw. aus mehreren, hydraulisch oder pneumatisch betätigbaren Schwenkarmen zusammengesetzte Vorrichtungen bekannt geworden, die am freien Ende des letzten Armes eine Zange, Saugnpfe oder sonstige Aufnahmevorrichtungen zum Greifen und Umsetzen eines Maschinenteils oder Werkzeuges aufweisen. Aufgabe der Erfindung ist es, eine Vorrichtung der letztgeschilderten Gattung so zu verbessern, daß ein relativ einfach aufgebautes, preiswertes und weitgehend wartungsfreies System zur Beherrschung einer einfachen Arbeitsebene bis hin zur Beherrschung eines vorbestimmten Arbeitsraumes bei vielseitiger Einsatzmöglichkeit machbar ist. Die Verwendung in Klein- und Mittelbetrieben soll dabei ebenso möglich sein, wie der Einsatz in Großbetrieben, wenn letzte Präzision und höchster Bedienungskomfort nicht unbedingt das Primat haben.
Nach der Erfindung ist vorgesehen, daß bei einer Vorrichtung der gattungsgemäßen Art mit wenigstens einer Schwenkeinheit, die Schwenkeinheit aus zwei mit Abstand über einen Tragarm und einen kraft- und formschlüssigen Hülltrieb miteinander verbundenen Umlenkrädern mit zugehörigem Antrieb besteht, wobei das eine Umlenkrad drehfest auf einer unteren, die feststehende Schwenkachse für den Tragarm bildenden Achse angeordnet ist, während das zweite Umlenkrad auf einer im freien Ende des Tragarms gehaltenen Achse gelagert ist. Weitere Vorschläge nach der Erfindung sind in den Ansprüchen detailliert.

- 4 -

Anhand der Zeichnung sei die Erfindung bsph. erläutert.
Es zeigen:

Fig. 1 eine einfache einarmige Schwenkeinheit;

Fig. 2 die Schwenkeinheit nach Fig. 1 mit zusätzlicher
Rotationsmöglichkeit um eine fußseitige vertikale
Achse;

Fig. 3 eine zweiarmige Schwenkeinheit in Erweiterung nach
dem Muster entsprechend Fig. 2 und

Fig. 4 und 5 Details der Ausbildung eines Schwenkarms in
Drauf- und Seitenansicht.

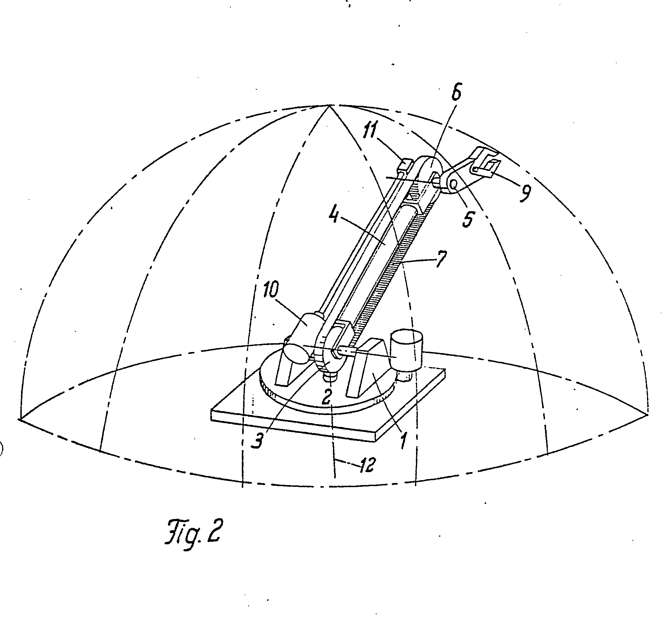

Die in Fig. 1 gezeigte einarmige Schwenkeinheit ist für
einfache Handhabungen in einer einzigen Ebene - z.B. als
Entnahme-Vorrichtung - gedacht. In einer ortsfesten Konsole 1
ist eine untere Achse 2 drehfest zusammen mit einem feststehenden unteren Zahnrad 3 gelagert. Um die Achse 2 ist ein
Tragarm 4 schwenkbar, der an seinem freien oberen Ende zur
drehbeweglichen Lagerung einer oberen Achse 5 mit Zahnrad 6
dient. Ein Zahnriemen 7 verbindet die beiden Zahnräder 3 und
6. Der Abstand der beiden Zahnräder 3 und 6 wird somit durch
den Tragarm 4 bestimmt, der bei entsprechender Ausbildung,
bspw. durch Gewindestücke, gleichzeitig der Riemenspannung
dienen kann. An der oberen Achse 5 ist ein Werkzeug, bspw.
ein Saugnapf 8 oder eine Zange 9 auswechselbar befestigt. Der
Arm 4 kann um die Achse 2 durch einen aus Motor 10 und Schneckengetriebe 11 bestehenden Antrieb geschwenkt werden, wobei der
Antrieb die Schwenkbewegung des Armes 4 mitmacht. Das Schnek-
kengetriebe 11 greift an der oberen Achse 5 an, kann aber auch
in Umkehrung des gesamten Antriebs an der Achse 2 zum Angriff
gebracht werden. Wird der Antrieb 10,11 betätigt, so schwenkt
der Arm 4 um den Mittelpunkt des mit der Achse 2 feststehenden
unteren Zahnrades 3 dergestalt, daß - bei einer Übersetzung 1:1 -
auch das obere, auf der Achse 5 befestigte Zahnrad 6 keine Drehung um die eigene Achse vollzieht. Die einmal gewählte Stellung

RHEIN-RUHR GUMMI GMBH, 4300 E s s e n , Norbertstr.

A n s p r ü c h e

1. Vorrichtung zum Handhaben von Gegenständen zwecks Automatisierung von Arbeitsvorgängen (Roboter), bestehend
aus wenigstens einer um eine horizontale Achse bewegbaren Schwenkeinheit, an deren freien Ende ein Werkzeug, bspw. eine Zange, ein Saugnapf oder dgl., befestigt
ist,
d a d u r c h    g e k e n n z e i c h n e t,
daß die Schwenkeinheit aus zwei mit Abstand über einen
Tragarm (4) und einen kraft- und formschlüssigen Hülltrieb (7) miteinander verbundenen Umlenkrädern (3; 6)
mit zugehörigem Antrieb besteht, wobei das eine Umlenkrad (3) drehfest auf einer unteren, die feststehende
Schwenkachse für den Tragarm (4) bildenden Achse (2) angeordnet ist, während das zweite Umlenkrad (6) auf einer
im freien Ende des Tragarms (4) gehaltenen Achse (5) gelagert ist.

2. Vorrichtung nach Anspruch 1,
d a d u r c h    g e k e n n z e i c h n e t,
daß der Hülltrieb als Zahnriemen (7) gestaltet ist und
die Umlenkräder als Zahnräder (3; 6) für den Zahnriemen
ausgebildet sind.

3. Vorrichtung nach  den Ansprüchen 1 und 2,
d a d u r c h    g e k e n n z e i c h n e t,
daß der Tragarm (4) als Riemenspannvorrichtung ausgebildet ist.

4. Vorrichtung nach den Ansprüchen 1 bis 3,
d a d u r c h    g e k e n n z e i c h n e t,
daß die Schwenkeinheit in an sich bekannter Weise auch
um eine horizontale Achse (12) verdrehbar ist.

- 2 -

des Werkzeuges 8, 9 bleibt also während der gesamten Schwenkbewegung des Armes 4 erhalten. Wird dagegen während der Schwenkbewegung eine Veränderung der Werkzeugstellung gewünscht, so ist dies durch Wahl unterschiedlicher Zahnraddurchmesser (Zähnezahl!) möglich. Bei Verwendung eines Schrittmotors ist die Möglichkeit gegeben, mit einer relativ einfachen Steuerung eine genaue Positionierung der Schwenkeinheit zu erreichen. Der selbsthemmende Schneckentrieb verhindert ein Überschwingen des Armes 4 beim Abschalten des Motors 1.

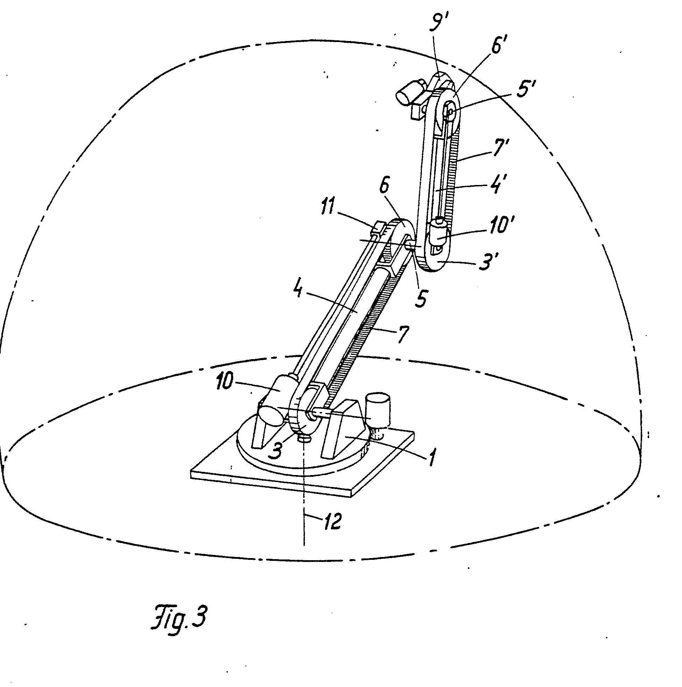

Sieht man entsprechend Fig. 2 vor, daß die Konsole 1 noch um eine vertikale Achse 12 drehbar ist, so ist mit dem Werkzeug 9 - bei einer Drehung um 360° - jeder Punkt erreichbar, der sich auf einer Halbkugelschale befindet.

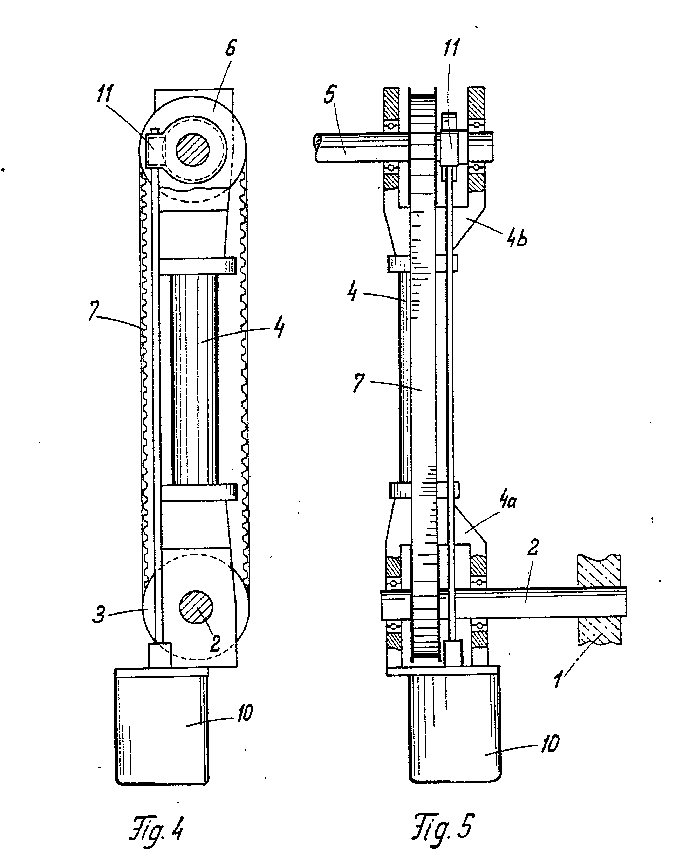

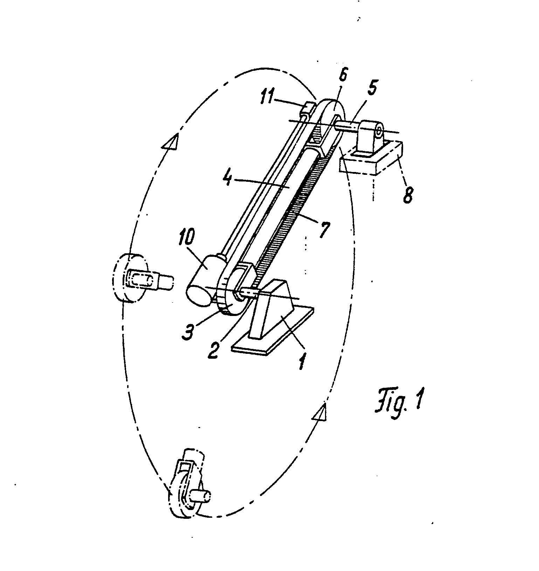

Ein Handhabungsgerät (Roboter) soll möglichst in der Lage sein, jeden Punkt innerhalb eines vorgegebenen Raumes mit seinem Werkzeug zu erreichen. Dies wird erfindungsgemäß entsprechend Fig. 3 für einen halbkugelförimigen Raum dadurch erreicht, daß auf die obere Achse 5 einer ersten Schwenkeinheit gemäß der Fig. 2 eine zweite Schwenkeinheit- bestehend aus unterem Zahnrad 3', Tragarm 4', oberer Achse 5', oberem Zahnrad 6', Zahnriemen 7'und Antrieb 10', 11',- aufgesetzt wird. Ein auf die obere Achse 5' aufgesetztes Werkzeug (Zange 9') behält beim Verschwenken der Arme 4, 4'- beim Übersetzungsverhältnis 1:1 - ebenfalls die einmal gewählte Stellung bei. Wie schon bei der Ausführung nach Fig. 1 oder 2 kann auch das Werkzeug 9' nach Fig. 3 zur Erhöhung der Anpaßbarkeit mit Dreh- und/oder Schwenkantrieben versehen werden.

Die Zeichnungsfiguren 4 und 5 lassen die Ausbildung einer Schwenkeinheit im Detail erkennen. Besonders deutlich ist die Lagermöglichkeit für die Zahnradachsen 2 und 5 dargestellt. Daraus ergibt sich, daß die Enden jedes Tragarms 4 als Gabelstücke 4a und 4b gestaltet sind.

Die Erfindung beschränkt sich nicht auf die dargest. ...en Ausführungsbeispiele. Eine Erweiterung der Vorrichtung auf drei oder mehr Schwenkeinheiten oder der Ersatz des Zahnriemens durch formschlüssige andere Hülltriebe ist durchaus möglich.

5. Vorrichtung nach den Ansprüchen 1 bis 4,
   d a d u r c h   g e k e n n z e i c h n e t,
   daß der Antrieb für die Schwenkeinheit aus Motor (10)
   und Schneckentrieb (11) besteht und mit der Schwenkeinheit verbunden um deren Achse (2) bewegbar ist, wobei der Schneckentrieb (11) wahlweise an der unteren
   Achse (2) oder an der oberen Achse (5) angreift.

6. Vorrichtung nach den Ansprüchen 1 bis 5,
   d a d u r c h   g e k e n n z e i c h n e t,
   daß die Schwenkeinheit baukastenartig durch wenigstens
   eine weitere identische Schwenkeinheit mit eigenem Antrieb dergestalt erweiterbar ist, daß die obere Achse (5)
   der ersten Schwenkeinheit gleichzeitig die feststehende
   untere Achse der zweiten Schwenkeinheit und die Lagerung
   für deren unteres Umlenkrad (3') bildet.

0076947

Fig. 2

Fig.3

Fig. 4

Fig. 5

0076947

Fig. 1

0076947

Europäisches
Patentamt

**EUROPÄISCHER RECHERCHENBERICHT**

Nummer der Anmeldung

EP 82 10 8765

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | B 25 J 9/00 |
| X | FR-A-1 373 155 (U.S. INDUSTRIES) <br> * Seite 2, Spalte 2, Zeile 28 - Seite 3, Spalte 1, Zeile 9; Seite 3, Spalte 2, Zeilen 32-44 * | 1-3 | |
| | --- | | |
| X | DE-A-1 918 745 (AIDA TEKKOSHO) <br> * Seite 10, Zeile 15 - Seite 11, Zeile 18 * | 1,2,6 | |
| | --- | | |
| E | EP-A-0 066 394 (WESTINGHOUSE ELECTRIC CORPORATION) <br> * Seite 4, Zeilen 4-16; Seite 5, Zeilen 14-27 * | 1,2,4 | |
| | --- | | |
| A | DE-C-1 481 819 (SOCIETE FINANCIERE ET INDUSTRIELLE DES ATELIERS ET CHANTIERS DE BRETAGNE) <br> * Anspruch 1 * | 5 | RECHERCHIERTE SACHGEBIETE (Int. Cl. ³) <br><br> B 25 J 9/00 <br> B 25 J 11/00 |
| | --- | | |
| A | DE-A-2 915 603 (ZAHNRADFABRIK FRIEDRICHSHAVEN) <br> * Seite 14, Zeilen 14-23; Figuren 1,2 * | 1-3 | |
| | ----- | | |

Der vorliegende Recherchenbericht wurde für alle Patentansprüche erstellt.

| Recherchenort <br> DEN HAAG | Abschlußdatum der Recherche <br> 20-01-1983 | Prüfer <br> LAMMINEUR P.C.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82